# EUROPÄISCHE PATENTSCHRIFT

(11) **EP 3 486 479 B1**
(45) Veröffentlichungstag und Bekanntmachung des Hinweises auf die Patenterteilung: **09.09.2020**
(21) Anmeldenummer: 18206405.5
(22) Anmeldetag: 15.11.2018
(51) Int. Cl.: F03D 7/04, F03D 80/40

(54) **VERFAHREN ZUM BETRIEB EINES WINDPARKS UND WINDPARK**
METHOD FOR OPERATION OF A WIND FARM AND WIND FARM
PROCÉDÉ DE FONCTIONNEMENT D'UN PARC ÉOLIEN ET PARC ÉOLIEN

(30) Priorität: 16.11.2017 DE 102017010608
(43) Veröffentlichungstag der Anmeldung: 22.05.2019
(73) Patentinhaber: Senvion GmbH, 22297 Hamburg (DE)
(72) Erfinder: Zastrow, Björn, 25524 Itzehoe (DE)
(74) Vertreter: Glawe, Delfs, Moll

(56) Entgegenhaltungen:
- EP-A1- 2 778 404
- DE-A1-102010 015 595
- DE-A1-102011 085 107
- US-A1- 2012 226 485

## Beschreibung

Die Erfindung betrifft ein Verfahren zum Betrieb eines Windparks sowie einen zur Durchführung dieses Verfahren ausgebildeten Windpark und ein entsprechendes Computerprogrammprodukt.

Windparks umfassend mehrere technisch zumindest teilweise, bspw. über ein windparkinternes Leitungsnetz, zusammenhängende Windenergieanlagen sind aus dem Stand der Technik bekannt.

Weiterhin ist bekannt, dass bei bestimmten Witterungslagen die Gefahr besteht, dass außen liegende Teile von Windenergieanlagen, insbesondere deren Rotorblätter vereisen, können. Bei einer Vereisung der Rotorblätter wird deren sehr präzise berechnete und gefertigte Form verändert, so dass sich die Aerodynamik an den Rotorblättern verschlechtert. Dies resultiert nicht nur regelmäßig in Ertragseinbußen, sondern kann bei ungleichmäßigem Eisansatz an den einzelnen Rotorblättern auch zu einer Unwucht des Rotors und Vibrationen führen, welche die Windenergieanlage schädigen können. Schließlich besteht noch die Gefahr, dass an den Rotorblättern gebildetes Eis beim weiteren Betrieb unter der Folge der erheblichen Fliehkräfte weggeschleudert wird und auch noch in einiger Entfernung von der Windenergieanlage Personen verletzen bzw. Sachen beschädigen kann.

Um Windenergieanlagen auch bei Witterungslagen, in denen Gefahr von Eisansatz besteht, betreiben zu können, um so einen vollständigen Ertragsausfall zu vermeiden, ist bekannt, die Rotorblätter durch Beheizung zu enteisen. Die Beheizung kann durch über die Rotorblätter verteilte Widerstandsheizelemente oder durch Einblasen von Heißluft in die zu weiten Teilen hohlen Rotorblätter erfolgen. Unabhängig von der Art der Enteisung ist dafür ein erheblicher Energieaufwand erforderlich.

Im Stand der Technik wird die Enteisung durch die Anlagensteuerung einer evtl. betroffenen Windenergieanlage nach einem vorgegebenen Regelungsschema ein- bzw. ausgeschaltet, ohne dass jedoch im Vorwege sichergestellt werden kann, dass eine Enteisung tatsächlich möglich ist oder sich der Ertrag der Anlage um ein den für die Enteisung erforderlichen Energiebedarf rechtfertigendes Maß erhöht. Aus dem Stand der Technik sind zum Beispiel folgende Beispiele bekannt: DE 10 2011 085107 A1, EP 2 778 404 A1, US 2012/226485 A1 und DE 10 2010 015595 A1.

Insbesondere im Falle der Vereisung von mehreren Windenergieanlagen eines Windparks, ist die Enteisung sämtlicher Windenergieanlagen aufgrund der dafür benötigten Energiemenge sehr kostenintensiv. Dies gilt insbesondere, wenn die dafür benötigte Energie nicht durch den Windpark selbst aufgebracht werden kann, sondern aus dem Versorgungsnetz bezogen werden muss. Die vorstehend in Bezug auf einzelne Windenergieanlagen genannten Probleme können sich bei einem Windpark also noch vervielfachen.

Der Erfindung liegt die Aufgabe zugrunde ein Verfahren zum Betrieb eines Windparks sowie ein zur Durchführung dieses Verfahrens ausgebildeten Windpark zu schaffen, bei dem die aus dem Stand der Technik genannten Probleme nicht mehr oder nur noch im verminderten Umfang auftreten.

Gelöst wird diese Aufgabe durch ein Verfahren gemäß dem Hauptanspruch sowie einen Windpark gemäß Anspruch 8 und ein Computerprogrammprodukt gemäß Anspruch 10. Vorteilhafte Weiterbildungen sind Gegenstand der abhängigen Ansprüche.

Demnach betrifft die Erfindung ein Verfahren zum Betrieb eines Windparks umfassend wenigstens zwei Windenergieanlagen mit jeweils einem Enteisungssystem für die Rotorblätter der jeweiligen Windenergieanlage, wobei die Änderung des Aktivierungszustandes der Enteisungssysteme der Windenergieanlagen des Windparks koordiniert gesteuert wird und die Schritte umfasst:
a) Bewertung des Betriebszustandes wenigstens einer aus den Windenergieanlagen des Windparks ausgewählten Pilotanlage;
b) Änderung des Aktivierungszustandes des Enteisungssystems bei der wenigstens einen Pilotanlage;
c) Erneute Bewertung des Betriebszustandes der wenigstens einen Pilotanlage; und
d) Bei Feststellung einer Verbesserung in der Bewertung des Betriebszustandes bei wenigstens einer Pilotanlage, Änderung des Aktivierungszustandes des Enteisungssystems wenigstens einer weiteren Windenergieanlage des Windparks.

Weiterhin betrifft die Erfindung einen Windpark umfassend mehrere an ein windparkinternes Netz angeschlossene Windenergieanlagen mit jeweils einem Rotor und einem Enteisungssystem für die Rotorblätter des Rotors, wobei der Windpark zur Durchführung des erfindungsgemäßen Verfahrens ausgebildet ist.

Die Erfindung betrifft außerdem ein Computerprogrammprodukt umfassend Programmteile, welche, wenn geladen in einem Computer, vorzugsweise die Anlagensteuerung einer Windenergieanlage oder eine zentrale Windparksteuerung, zur Durchführung des erfindungsgemäßen Verfahrens ausgelegt sind.

Der Erfindung liegt die Erkenntnis zugrunde, dass sich aus einer koordinierten Steuerung der Enteisungssysteme der Windenergieanlagen eines Windparks deutliche Vorteile gegenüber dem Stand der Technik ergeben. Dabei ist es ausreichend, wenn diese Steuerung lediglich den Aktivierungszustand der einzelnen Enteisungssysteme - also ob diese grundsätzlich ein- oder ausgeschaltet sind - koordiniert, während die weitergehende Regelung und Überwachung des Enteisungssystems, bspw. hinsichtlich der Temperatur, vergleichbar zum Stand der Technik durch die jeweilige Anlagensteuerung der einzelnen Windenergieanlagen erfolgen kann.

Durch eine entsprechende Steuerung ist es möglich, zunächst bei einer oder mehreren - jedoch nicht sämtliche - Windenergieanlagen des Windparks als sog. Pilotanlagen den Aktivierungszustand des Enteisungssystems zu verändern - ob nun durch Einschalten oder Ausschalten - und an diesen Pilotanlagen zu überprüfen, ob die durchgeführte Änderung des Aktivierungszustandes eine Verbesserung in deren Betrieb zur Folge hat. Bei umfangreichem, den Betrieb einer Windenergieanlage verbietendem Eisansatz kann die Aktivierung des Enteisungssystems eine Inbetriebnahme einer Pilotanlage ggf. überhaupt erst ermöglichen. Erst wenn sich der Betriebszustand bei der oder den Pilotanlage(n) um ein ausreichendes Maß verbessert, wird die dort vorgenommene Änderung des Aktivierungszustandes des Enteisungssystems auch bei den anderen, nicht zu den Pilotanlagen zählenden Windenergieanlagen des Windparks durchgeführt.

Um eine mögliche Verbesserung des Betriebszustands einer Pilotanlage durch Änderung des Aktivierungszustandes des Enteisungssystems feststellen zu können, wird vor der besagten Änderung der Betriebszustand der Pilotanlage bewertet. Dazu können verschiedene Betriebskennzahlen, wie bspw. die aktuelle erzeugte Leistung, der Wirkungsgrad der Windenergieanlage (also das Verhältnis von Windleistung zu erzeugter Leistung) oder der Eigenverbrauch der Windenergieanlage (also der Energieverbrauch der für den Betrieb der Windenergieanlage benötigten Komponenten) berücksichtigt werden. Auch Faktoren betreffend die Betriebssicherheit der Windenergieanlage, die sich bspw. aus Rotorunwuchten und/oder dem Risiko von Eisabwurf, ergeben, können berücksichtigt werden.

Sämtliche Faktoren, die bei der Bewertung des Betriebszustandes der Windenergieanlage berücksichtigt werden sollen, können gewichtet in einer Indexzahl zusammengefasst werden. Ist die Windenergieanlage zum Zeitpunkt der Bewertung des Betriebszustandes beispielsweise aufgrund zu hoher Gefahr von Eisabwurf stillgesetzt, resultiert daraus sowohl aufgrund ausbleibender Leistungseinspeisung als auch durch das hohe Risiko von Eisabwurf eine ungünstige Indexzahl, während ein ungestörter Normalbetrieb der Windenergieanlage zu einer günstigen Indexzahl führt.

Bei der anschließenden Änderung des Aktivierungszustandes des Enteisungssystems der Pilotanlage(n) kann es sich um das Einschalten oder auch um das Ausschalten des Enteisungssystems handeln.

Sofern es sich bei der Änderung des Aktivierungszustandes um das Einschalten des Enteisungssystems handelt, kann bei massivem, ein Stillsetzen der Windenergieanlagen erfordernder Eisansatz über die Pilotanlage(n) ermittelt werden, ob eine Enteisung überhaupt möglich ist, bevor die Energie für den Versuch der Enteisung auch bei den übrigen Anlagen des Windparks aufgewendet wird. Bei nur leichtem Eisansatz, bei der die Windenergieanlagen des Windparks ggf. noch weiterbetrieben werden können, kann über die Pilotanlage(n) ermittelt werden, ob der Energieaufwand für die Enteisung bei sämtlichen Windenergieanlagen des Windparks aufgrund einer dadurch erreichbaren Steigerung der Leistungserzeugung gerechtfertigt ist. Dies gilt insbesondere auch in Schwachwindsituationen, in denen eine Windenergieanlage mit Eisansatz ggf. nicht betrieben werden darf oder kann, eine vollständig enteiste Anlage aber Leistung erzeugen würde. In diesem Fall kann mit Hilfe der Pilotanlage(n) festgestellt werden, ob der zu erwartende Ertrag der Windenergieanlagen die dafür zunächst erforderliche Energie übersteigt. Nur wenn dies der Fall ist, kann vermutet werden, dass sich eine Enteisung auch der weiteren Windenergieanlagen eines Windparks lohnt.

Auch beim Abschalten als Änderung des Aktivierungszustandes des Enteisungssystems kann es vorteilhaft sein, dieses zunächst an einer oder mehreren Pilotanlage(n) durchzuführen. So kann anhand einer Pilotanlage überprüft werden, ob nach dem Abschalten des Enteisungssystems eine erneute Vereisung auftritt, die dann mit erhöhtem Energieeinsatz wieder zu entfernen ist. Dabei kommt hinzu, dass je nach Enteisungssystem zwischen dem Abschalten und einem erneuten Wiederanschalten des System häufig ein Zeitintervall von bspw. 2 Stunden vorgeschrieben ist. In diesem Zeitintervall kann eine Windenergieanlage nur reduziert oder überhaupt keine Leistung erzeugen. Über die Pilotanlage(n) kann also überprüft werden, ob ein Abschalten der Enteisungssysteme bei den Windenergieanlagen eines Windparks sinnvoll ist, oder ob die für den Betrieb der Enteisungssysteme erforderliche Energie weiter aufgewendet werden sollte.

Nachdem der Aktivierungszustand des Enteisungssystems der Pilotanlage(n) geändert wurde, wird - wie zuvor - der Betriebszustand der Pilotanlage(n) ermittelt. Da sich eine Änderung des Aktivierungszustands des Enteisungssystems abgesehen von der Änderung des Eigenbedarfs in der Regel nicht unmittelbar auf den Betriebszustand einer Windenergieanlage auswirkt, kann zwischen der Änderung des Aktivierungszustands des Enteisungssystems und der anschließenden Bewertung des Betriebszustandes der Windenergieanlage ein Zeitintervall vorgesehen sein. Das Zeitintervall kann dabei fest vorgegeben sein, entweder global oder individuell für jede Art der Änderung des Aktivierungszustands des Enteisungssystems. Es ist aber insbesondere beim Einschalten des Enteisungssystems auch möglich, nach Änderung des Aktivierungszustands des Enteisungssystems den Betriebszustand der entsprechenden Windenergieanlage dauerhaft zu überwachen und bei Feststellung, dass sich die Bewertung nicht mehr verändert, die zuletzt ermittelte Bewertung des Betriebszustands der Windenergieanlage heranzuziehen.

Anschließend wird die Bewertung des Betriebszustands der Pilotanlage(n) von vor der Änderung des Aktivierungszustandes des Enteisungssystems mit derjenigen nach der Änderung verglichen. Wird dabei eine Verbesserung festgestellt, kann in der Folge die bei der oder den Pilotanlage(n) durchgeführte Änderung des Aktivierungszustandes des Enteisungssystems auch auf diejenige weiteren Windenergieanlagen des Windparks übertragen werden, die nicht zu den Pilotanlagen zählen. Dabei ist davon auszugehen, dass die Betriebszustände der Enteisungssysteme der Windenergieanlagen in einem Windpark aufgrund der geographischen Nähe und dadurch vergleichbarer Witterungsbedingungen an allen Windenergieanlagen im Normalfall gleich ist, sodass sich die Enteisungssysteme der weiteren Windenergieanlagen zu diesem Zeitpunkt in demselben Aktivierungszustand wie das Enteisungssystem der Pilotanlage(n) vor dessen Änderung befinden.

Wenn mehr als eine weitere Windenergieanlage vorgesehen ist, ist eine Änderung des Aktivierungszustandes des jeweiligen Enteisungssystem in Form eines Abschaltens grundsätzlich Zeitgleich bei allen weiteren Windenergieanlagen möglich. Es kann jedoch vorteilhaft sein, die Enteisungssysteme der einzelnen Windenergieanlage gestaffelt abzuschalten, um eine zu große Rückwirkung auf das Versorgungsnetz aufgrund des in der Regel nicht unerheblichen Lastwegfalls beim Abschalten von Enteisungssystemen zu vermeiden.

Um vergleichbar beim Einschalten der Enteisungssysteme der weiteren Windenergieanlagen unerwünschte Rückwirkungen auf das Netz zu vermeiden und/oder um sicherzustellen, dass die Enteisung ausschließlich mit durch den Windpark selbst erzeugter Energie erfolgt, ist bevorzugt, wenn in diesem Fall die Enteisungssysteme der weiteren Windenergieanlagen derart gestaffelt erfolgt, dass der Gesamtenergieverbrauch für die Enteisung einen vorgegebenen oder ermittelbaren Grenzwert nicht überschreitet. Der Grenzwert kann entweder fest vorgegeben sein (bspw. durch den Netzbetreiber) oder sich unmittelbar aus der vom Windpark momentan erzeugten Leistung ergeben bzw. mit dieser übereinstimmen. So kann bspw. grundsätzlich sichergestellt werden, dass die Enteisung nur mit der im Windpark selbst erzeugten Leistung erfolgt. Dabei kann weiter bevorzugt sein, wenn für den in Abhängigkeit der erzeugten Leistung ermittelten Grenzwert eine fixe Untergrenze festgelegt ist, bei dem zumindest jeweils eine Windenergieanlage enteist werden kann. Selbst wenn die dafür benötigte Energie bei unzureichender Energieerzeugung durch den Windpark selbst dann wenigstens teilweise aus dem Netz bezogen werden muss, kann so zumindest sichergestellt werden, dass die Enteisung eines Windparks auch dann erfolgt, wenn dieser selbst momentan nicht ausreichend Energie für die Enteisung einer einzelnen Windenergieanlage erzeugt.

Ist nur ein gestaffeltes Einschalten der Enteisungssysteme der weiteren Windenergieanlagen möglich, ist bevorzugt, eine Bewertung des Betriebszustandes aller weiteren Windenergieanlagen - wie oben beschrieben - durchzuführen und die Enteisungssysteme derjenigen Windenergieanlage mit niedrigerer Bewertung des Betriebszustandes vor den Enteisungsanlagen der Windenergieanlagen mit höherer Bewertung des Betriebszustandes einzuschalten. Durch diese Maßnahme wird erreicht, dass diejenigen Windenergieanlagen, bei denen eine Enteisung eine deutlich größere Verbesserung des Betriebszustandes und damit in der Regel einen höheren Sprung in der Leistungserzeugung erwarten lässt als solche Anlagen, die trotz eines noch nicht eingeschalteten Enteisungssystem eine bessere Bewertung ihres Betriebszustandes aufweisen, zuerst eingeschaltet werden.

Es ist möglich, dass die Pilotanlage(n) für einen Windpark fest vorgegeben ist bzw. sind. Alternativ ist es möglich, die Pilotanlage(n) des Windparks variable in Abhängigkeit von der Windrichtung, der Nabenhöhe über Grund und/oder über Normalnull sowie von der Position im Windpark zu wählen. So kann bspw. eine Pilotanlage gewählt werden, auf die der Wind unmittelbar und insbesondere ohne durch weitere Windenergieanlagen des Windparks beeinflusst zu werden, auftrifft, sowie eine weitere Pilotanlage auf der entgegengelegenen Seite des Windparks, die nur durch die anderen Windenergieanlagen beeinflusster Wind erreicht. Die Änderung des Aktivierungszustandes des Enteisungssystems bei diesen beiden exemplarisch genannten Pilotanlagen kann durchaus unterschiedliche Auswirkungen auf die Bewertung des Betriebszustandes der jeweiligen Anlagen haben.

Die Windenergieanlagen eines Windparks können in Gruppen zusammengefasst sein, innerhalb derer der Aktivierungszustand des Enteisungssystems jeweils gemeinsam verändert wird. Es kann dabei vorgesehen sein, dass für jede der Gruppen eine oder mehrere Pilotanlagen bestimmt werden, sodass bei Verbesserung der Bewertung des Betriebszustandes einer Pilotanlage durch Änderung des Aktivierungszustandes des Enteisungssystems diese Änderung bei den Windenergieanlagen der zugeordneten Gruppe übertragen wird. Dies ist insbesondere bei größeren Windparks vorteilhaft, in denen die Gefahr von Eisansatz über den Windpark unterschiedlich sein kann.

Zur Erläuterung des erfindungsgemäßen Windparks sowie des erfindungsgemäßen Computerprogrammprodukts wird auf die vorstehenden Ausführungen verwiesen. Die koordinierte Steuerung des Aktivierungszustandes der Enteisungssysteme der Windenergieanlagen des Windparks kann bspw. durch die Steuerungseinheit einer der Windenergieanlagen oder eine zentrale Windparksteuerung realisiert werden. Es ist auch möglich, die Steuerung als verteiltes System über mehrere Steuerungseinrichtungen einer oder mehrere Windenergieanlagen und/oder eines Parkmasters auszuführen.

Die Erfindung wird nun anhand eines vorteilhaften Ausführungsbeispiels unter Bezugnahme auf die beigefügten Zeichnungen näher beschrieben. Es zeigt:

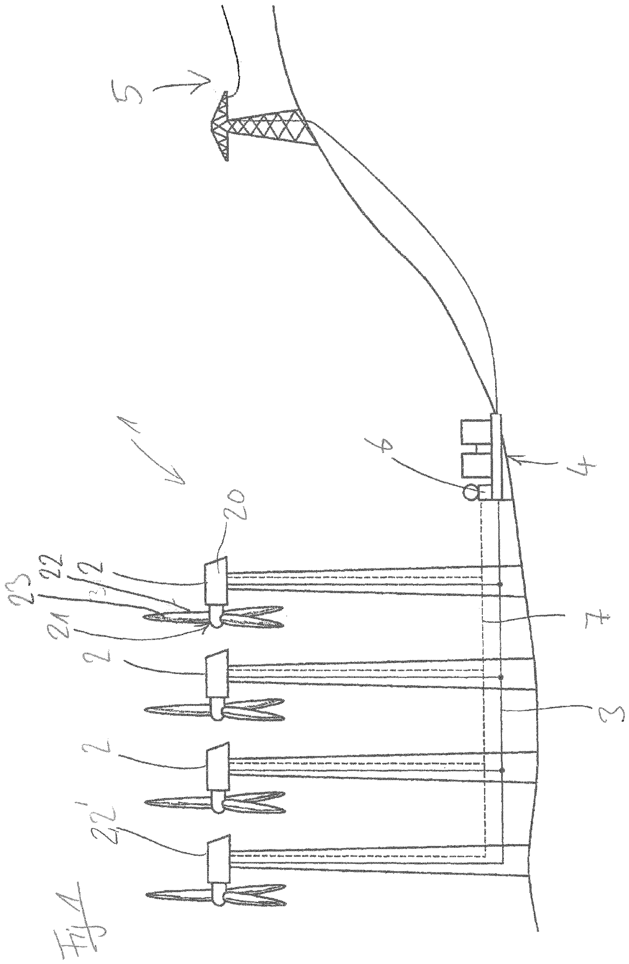

- Figur 1:: eine schematische Darstellung eines erfindungsgemäßen Windparks, bei dem das erfindungsgemäße Verfahren ausgeführt wird.

In Figur 1 ist ein erfindungsgemäßer Windpark 1 mit mehreren Windenergieanlagen 2 dargestellt. Die Windenergieanlagen 2 sind über ein windparkinternes Netz 3 an einer Übergabestation 4 angebunden, von wo aus die von den Windenergieanlagen 2 erzeugte elektrische Leistung in ein öffentliches Versorgungnetz 5 eingespeist wird.

Teil der Übergabestation 4 ist weiterhin ein Parkmaster als zentrale Windparksteuerung 6 für zentral zu steuernde Funktionen des Windparks 1 sowie dessen Windenergieanlagen 2 vorgesehen. Der Parkmaster 6 ist über Steuerleitungen 7 mit den Anlagensteuerungen (nicht dargestellt) der einzelnen Windenergieanlagen 2 verbunden.

Die Windenergieanlagen 2 umfassen jeweils einen um eine im Wesentlichen horizontale Achse an einer Gondel 20 drehenden Rotor 21 mit jeweils drei Rotorblättern 22. An den Rotorblättern 22 sind Widerstandsheizelemente als Teil eines Enteisungssystems 23 vorgesehen, die bspw. durch die Anlagensteuerung der jeweiligen Windenergieanlage 2 oder ein gesondertes Modul gesteuert werden. Der Aktivierungszustand der Enteisungssysteme 23 der einzelnen Windenergieanlagen 2 kann auch durch den Parkmaster 6 gemäß dem nachfolgend beschriebenen Verfahren gesteuert werden. Alternativ dazu ist es grundsätzlich auch möglich, dass die Anlagensteuerung einer der Windenergieanlagen 2 diese Funktion übernimmt.

Für die nachfolgende Erläuterung des erfindungsgemäßen Verfahrens wird davon ausgegangen, dass zunächst keine, einen Eisansatz hervorrufende Witterungsbedingungen vorliegen und in der Folge die Enteisungssysteme 23 sämtlicher Windenergieanlagen 2 abgeschaltet sind.

Davon ausgehend soll es in dem vorliegenden Beispiel nach einer Veränderung der Witterungsbedingungen zu Eisansatz an den Rotorblättern 22 der Windenergieanalgen 2 kommen. Dieser Eisansatz kann, wie aus dem Stand der Technik bekannt, durch die Anlagensteuerung der einzelnen Windenergieanlagen festgestellt und an den Parkmaster 6 gemeldet werden.

Der Parkmaster 6 bestimmt daraufhin die in der aktuellen Windrichtung zuvorderst positionierte Windenergieanlage 2 des Windparks als Pilotanlage 2' und bewertet deren Betriebszustand. Dazu werden der momentane Wirkungsgrad, der Eigenverbrauch, die Vibrationen in der Windenergieanlage sowie die Gefahr von Eisabwurf gewichtet in einer Indexzahl zusammengefasst.

Anschließend wird das Enteisungssystem 23 der Pilotanlage 2' angeschaltet und in vorgegebenen Zeitabständen eine Bewertung des Betriebszustandes der Pilotanlage 2' durchgeführt. Wenn sich die Bewertung des Betriebszustandes der Pilotanlage 2' dabei nicht mehr verändert, kann davon ausgegangen werden, dass die Enteisung entweder abgeschlossen oder - sofern sich keinerlei spürbare Änderung in der Bewertung - nicht möglich ist.

Die zuletzt vorgenommene Bewertung des Betriebszustandes der Pilotanlage 2' wird dann mit deren Bewertung des Betriebszustandes vor der Änderung des Aktivierungszustandes des Enteisungssystems 23 - nämlich dessen Einschalten - verglichen. Übersteigt bspw. die Differenz zwischen den entsprechenden Indexzahlen einen vorgegebenen Minimalwert, wird die Enteisung der Pilotanlage 2' als ausreichend vorteilhaft gewertet, dass grundsätzlich auch die weiteren Windenergieanlagen 2 des Windparks 1 enteist werden sollen.

Die Änderung des Aktivierungszustandes des Enteisungssystems 23 der weiteren Windenergieanlagen 2 des Windparks 1 erfolgt gestaffelt, sodass für die Enteisung der Windenergieanlagen 2 mit eingeschaltetem Enteisungssystems 23 den von dem Windpark 1 erzeugte Energie nicht übersteigt. So kann bspw. zunächst aufgrund der erhöhten Energieerzeugung der bereits enteisten Pilotanlage 2' das Enteisungssystem 23 einer weiteren Windenergieanlage 2 eingeschaltet werden. Ist diese Windenergieanlage 2 ebenfalls vollständig enteist kann durch die über den Windpark 1 gesehene weitere Leistungssteigerung ausreichen, im nächsten Schritt zwei weitere Windenergieanlagen 2 gleichzeitig enteisen, usw. Am Ende des gestaffelten Einschaltens sind die Enteisungssysteme 23 bei sämtlichen Windenergieanlagen 2 des Windparks 1 aktiviert.

Ändern sich die Witterungsbedingungen zu einem späteren Zeitpunkt erneut, kann anhand der Pilotanlage 2' festgestellt werden, ob die Enteisungssysteme 23 der Windenergieanalgen 2 des Windparks 1 wieder ausgeschaltet werden können.

Dazu wird, wie zuvor beschrieben, zunächst der Betriebszustand der Pilotanlage 2' ermittelt und anschließend deren Enteisungssystem 23 abgeschaltet. Nach einiger Zeit wird erneut der Betriebszustand ermittelt und überprüft ob sich dieser verbessert hat. Da sowohl die durch die Abschaltung des Enteisungssystems 23 in Form einer Reduzierung des Eigenverbrauchs der Pilotanlage 2', als auch ein möglicher erneuter Eisansatz über die Vibrationen in der Pilotanlage 2' sowie die Gefahr von Eisabwurf in die Bewertung einfließen, können die möglichen Vor- und Nachteile des Abschaltens des Enteisungssystem 23 miteinander abgewogen werden.

Wird festgestellt, dass die Abschaltung des Enteisungssystems 23 der Pilotanlage 2' keine Verbesserung oder im Gegenteil sogar eine Verschlechterung des Betriebszustandes zur Folge hat, wird das Enteisungssystem 23 der Pilotanlage 2' wieder reaktiviert. Wird hingegen festgestellt, dass das Abschalten des Enteisungssystems 23 vorteilhaft ist - bspw. weil der Eigenverbrauch der Pilotanlage 2' deutlich reduziert werden kann, ohne dass dadurch erneuter Eisansatz auftritt - kann die entsprechende Änderung des Aktivierungszustandes des Enteisungssystem 23 auf die weiteren Windenergieanlagen 2 übertragen werden.

Die Abschaltung der Enteisungssysteme 23 der weiteren Windenergieanlagen 2 erfolgt dabei ebenfalls gestaffelt, damit es zu keiner unerwünschten Rückwirkung in das Versorgungsnetz 5 kommt, wenn der Eigenverbrauch des gesamten Windparks 1 plötzlich stark gesenkt wird bzw. dadurch die in das Netz 5 eigespeiste Leistung sprunghaft ansteigt.

## Patentansprüche

1. Verfahren zum Betrieb eines Windparks (1) umfassend wenigstens zwei Windenergieanlagen (2) mit jeweils einem Enteisungssystem (23) für die Rotorblätter (22) der jeweiligen Windenergieanlage (2),
**dadurch gekennzeichnet, dass**
die Änderung des Aktivierungszustandes der Enteisungssysteme (23) der Windenergieanlagen (2) des Windparks (1) koordiniert gesteuert wird und die Schritte umfasst:
a) Bewertung des Betriebszustandes wenigstens einer aus den Windenergieanlagen (2) des Windparks (1) ausgewählten Pilotanlage (2');
b) Änderung des Aktivierungszustandes des Enteisungssystems (23) bei der wenigstens einen Pilotanlage (2');
c) Erneute Bewertung des Betriebszustandes der wenigstens einen Pilotanlage (2'); und
d) Bei Feststellung einer Verbesserung in der Bewertung des Betriebszustandes bei wenigstens einer Pilotanlage (2'), Änderung des Aktivierungszustandes des Enteisungssystems (23) wenigstens einer weiteren Windenergieanlage (2) des Windparks (1).

2. Verfahren nach Anspruch 1,
**dadurch gekennzeichnet, dass**
bei der Bewertung des Betriebszustandes die Leistungserzeugung, der Eigenverbrauch und/oder die Betriebssicherheit, vorzugsweise die Rotorunwucht und/oder die Gefahr von Eisabwurf, berücksichtigt werden.

3. Verfahren nach einem der vorhergehenden Ansprüche,
**dadurch gekennzeichnet, dass**
die Änderung des Aktivierungszustandes des Enteisungssystems (23) ein Einschalten oder ein Ausschalten des Enteisungssystems (23) ist.

4. Verfahren nach einem der vorhergehenden Ansprüche,
**dadurch gekennzeichnet, dass**
die Änderung des Aktivierungszustandes des Enteisungssystems (23) bei mehr als einer weiteren Windenergieanlage (2) des Windparks (1) gestaffelt erfolgt, wobei bei einem Einschalten des Enteisungssystems (23) als Änderung des Aktivierungszustandes bei den einzelnen weiteren Windenergieanlagen (2) vorzugsweise derart gestaffelt erfolgt, dass der Gesamtenergieverbrauch für die Enteisung einen Grenzwert nicht überschreitet.

5. Verfahren nach dem vorhergehenden Anspruch,
**dadurch gekennzeichnet, dass**
eine Bewertung des Betriebszustandes aller weiteren Windenergieanlagen (2) erfolgt und die Enteisungssysteme (23) derjenigen Windenergieanlage mit niedrigerer Bewertung des Betriebszustandes vor den Enteisungsanlagen (23) der Windenergieanlagen (2) mit höherer Bewertung des Betriebszustandes eingeschaltet werden.

6. Verfahren nach einem der vorhergehenden Ansprüche,
**dadurch gekennzeichnet, dass**
die wenigstens eine Pilotanlage (2') des Windparks (1) in Abhängigkeit von der Windrichtung, der Nabenhöhe über Grund und/oder Normalnull sowie von der Position im Windpark (1) variabel gewählt wird oder fest vorgegeben ist.

7. Verfahren nach einem der vorhergehenden Ansprüche,
**dadurch gekennzeichnet, dass**
mehrere Windenergieanlagen (2) des Windparks (1) in Gruppen zusammengefasst sind, bei denen der Aktivierungszustand der Enteisungssysteme (23) gemeinsam verändert wird.

8. Windpark (1) umfassend mehrere an ein windparkinternes Netz (3) angeschlossene Windenergieanlagen (2) mit jeweils einem Rotor (21) und einem Enteisungssystem (23) für die Rotorblätter (22) des Rotors (21),
**dadurch gekennzeichnet, dass**
der Windpark (1) zur Durchführung eines Verfahrens gemäß einem der vorstehenden Ansprüche ausgebildet ist.

9. Windpark nach Anspruch 8,
**dadurch gekennzeichnet, dass**
die Anlagensteuerung einer der Windenergieanlagen (2) des Windparks (1) oder eine zentrale Windparksteuerung (6) zur koordinierten Steuerung des Aktivierungszustandes der Enteisungssystems (23) der Windenergieanlagen (2) ausgebildet ist.

10. Computerprogrammprodukt umfassend Programmteile, welche, wenn geladen in einem Computer, vorzugsweise die Anlagensteuerung (20) einer Windenergieanlage (1) oder eine zentrale Windparksteuerung (6), zur Durchführung des Verfahrens nach einem der Ansprüche 1 bis 7 ausgelegt sind.

## Claims

1. Method for operating a wind farm (1) comprising at least two wind turbines (2), which each have a de-icing system (23) for the rotor blades (22) of the respective wind turbine (2),
**characterized in that**
the alteration of the activation state of the de-icing systems (23) of the wind turbines (2) of the wind farm (1) is controlled in a coordinated manner, and comprises the steps:
a) evaluating the operating state of at least one pilot wind turbine (2') selected from the wind turbines (2) of the wind farm (1);
b) altering the activation state of the de-icing system (23) in the case of the at least one pilot wind turbine (2');
c) evaluating over again the operating state of the at least one pilot wind turbine (2'); and
d) if an improvement is ascertained in the evaluation of the operating state in the case of at least one pilot wind turbine (2'), altering the activation state of the de-icing system (23) of at least one further wind turbine (2) of the wind farm (1).

2. Method according to Claim 1,
**characterized in that**
the power generation, the internal consumption and/or the operational safety, preferably the rotor unbalance and/or the risk of ice shedding, are taken into account in the evaluation of the operating state.

3. Method according to either one of the preceding claims,
**characterized in that**
the alteration of the activation state of the de-icing system (23) is the switching-on or the switching-off of the de-icing system (23).

4. Method according to any one of the preceding claims,
**characterized in that**
the alteration of the activation state of the de-icing system (23) is effected in a staggered manner in the case of more than one further wind turbine (2) of the wind farm (1), wherein, in the case of switching-on of the de-icing system (23) as alteration of the activation state, in the case of the individual further wind turbines (2), staggering is preferably effected in such a manner that the total energy consumption for the de-icing does not exceed a limit value.

5. Method according to the preceding claim,
**characterized in that**
an evaluation of the operating state of all further wind turbines (2) is effected, and the de-icing systems (23) of those wind turbines having a lower evaluation of the operating state are switched on before the de-icing systems (23) of the wind turbines (2) having a higher evaluation of the operating state.

6. Method according to any one of the preceding claims,
**characterized in that**
the at least one pilot wind turbine (2') of the wind farm (1) is selected in a variable manner, in dependence on the wind direction, the hub height above ground and/or above mean sea level, and on the position in the wind farm (1), or is specified in a fixed manner.

7. Method according to any one of the preceding claims,
**characterized in that**
a plurality of wind turbines (2) of the wind farm (1) are combined in groups, in which the activation state of the de-icing systems (23) is altered jointly.

8. Wind farm (1), comprising a plurality of wind turbines (2) connected to a grid (3) that is internal to the wind farm, each having a rotor (21) and a de-icing system (23) for the rotor blades (22) of the rotor (21),
**characterized in that**
the wind farm (1) is designed to execute a method according to any one of the preceding claims.

9. Wind farm according to Claim 8,
**characterized in that**
the system controller of one of the wind turbines (2) of the wind farm (1) or a central wind-farm controller (6) is designed to control the activation state of the de-icing system (23) of the wind turbines (2) in a coordinated manner.

10. Computer program product, comprising program parts that are designed, when loaded in a computer, preferably the system controller (20) of a wind turbine (1) or a central wind-farm controller (6), to execute the method according to any one of Claims 1 to 7.

## Revendications

1. Procédé d'exploitation d'un parc éolien (1) comprenant au moins deux installations éoliennes (2) ayant respectivement un système de dégivrage (23) pour les pales de rotor (22) de l'installation éolienne (2) respective,
**caractérisé en ce que** la modification de l'état d'activation du système de dégivrage (23) des installations éoliennes (2) du parc éolien (1) est commandée de manière coordonnée et comprend les étapes consistant à :
a) évaluer l'état de fonctionnement d'au moins une installation pilote (2') sélectionnée parmi les installations éoliennes (2) du parc éolien (1) ;
b) modifier l'état d'activation du système de dégivrage (23) de ladite au moins une installation pilote (2') ;
c) réévaluer l'état de fonctionnement de ladite au moins une installation pilote (2') ; et
d) si une amélioration de l'évaluation de l'état de fonctionnement de ladite au moins une installation pilote (2') est constatée, modifier l'état d'activation du système de dégivrage (23) au moins d'une autre installation éolienne (2) du parc éolien (1).

2. Procédé selon la revendication 1, **caractérisé en ce que** la production de puissance, la consommation propre et/ou la sécurité d'exploitation, de préférence le déséquilibre du rotor et/ou le risque de projection de glace, sont pris en compte pour l'évaluation de l'état de fonctionnement.

3. Procédé selon l'une quelconque des revendications précédentes, **caractérisé en ce que** la modification de l'état d'activation du système de dégivrage (23) est une mise sous tension ou une mise hors tension du système de dégivrage (23) .

4. Procédé selon l'une quelconque des revendications précédentes, **caractérisé en ce que** la modification de l'état d'activation du système de dégivrage (23) est effectuée de manière échelonnée s'il y a plus d'une installation éolienne (2) supplémentaire du parc éolien (1), dans lequel, si la mise sous tension du système de dégivrage (23) est la modification de l'état d'activation pour les installations éoliennes (2) supplémentaires individuelles, elle est effectuée de préférence de manière échelonnée de telle sorte que la consommation d'énergie totale pour le dégivrage ne dépasse pas une valeur limite.

5. Procédé selon la revendication précédente, **caractérisé en ce qu'**une évaluation de l'état de fonctionnement de toutes les installations éoliennes (2) supplémentaires est effectuée et les systèmes de dégivrage (23) de l'installation éolienne ayant une évaluation inférieure de l'état de fonctionnement sont mis sous tension avant les systèmes de dégivrage (23) des installations éoliennes (2) ayant une évaluation supérieure de l'état de fonctionnement.

6. Procédé selon l'une quelconque des revendications précédentes, **caractérisé en ce que** ladite au moins une installation pilote (2') du parc éolien (1) est choisie de manière variable ou est spécifiée de manière fixe en fonction de la direction du vent, de la hauteur du moyeu au-dessus du sol et/ou du niveau de la mer ainsi qu'en fonction de la position dans le parc éolien (1).

7. Procédé selon l'une quelconque des revendications précédentes, **caractérisé en ce que** plusieurs installations éoliennes (2) du parc éolien (1) sont regroupées dans des groupes dans lesquels l'état d'activation des systèmes de dégivrage (23) est modifié en commun.

8. Parc éolien (1), comprenant plusieurs installations éoliennes (2) connectées à un réseau interne au parc éolien (3) et ayant respectivement un rotor (21) et un système de dégivrage (23) pour les pales de rotor (22) du rotor (21),
**caractérisé en ce que** le parc éolien (1) est réalisé pour effectuer un procédé selon l'une quelconque des revendications précédentes.

9. Parc éolien selon la revendication 8, **caractérisé en ce que** la commande d'installation d'une des installations éoliennes (2) du parc éolien (1) ou une commande centrale de parc éolien (6) est réalisée pour une commande coordonnée de l'état d'activation du système de dégivrage (23) des installations éoliennes (2).

10. Produit de programme informatique, comprenant des parties de programme qui, lorsqu'elles sont chargées sur un ordinateur, de préférence la commande d'installation (20) d'une installation éolienne (1) ou une commande centrale de parc éolien (6), sont réalisées pour effectuer le procédé selon l'une quelconque des revendications 1 à 7.
